# EUROPÄISCHE PATENTSCHRIFT

(11) **EP 1 554 160 B1**
(45) Veröffentlichungstag und Bekanntmachung des Hinweises auf die Patenterteilung: **15.03.2006**
(21) Anmeldenummer: 03787673.7
(22) Anmeldetag: 16.07.2003
(51) Int. Cl.: B60R 16/02, H01R 35/02

(54) **ELEKTRISCHE VERBINDUNGSEINRICHTUNG**
ELECTRICAL CONNECTION DEVICE
DISPOSITIF DE CONNEXION ELECTRIQUE

(30) Priorität: 27.07.2002 DE 10234382
(43) Veröffentlichungstag der Anmeldung: 20.07.2005
(73) Patentinhaber: Delphi Technologies Inc., Troy, MI 48007 (US)
(72) Erfinder: LENG, Peter, 55128 Mainz (DE); GRINGS, Volker, 56291 Laudert (DE)
(74) Vertreter: Becker, Bernd
(86) Internationale Anmeldenummer: PCT/DE2003/002385
(87) Internationale Veröffentlichungsnummer: WO 2004/016470

(56) Entgegenhaltungen:
- EP-A- 0 924 815
- DE-A- 19 534 655
- PATENT ABSTRACTS OF JAPAN vol. 1999, no. 04, 30. April 1999 (1999-04-30) & JP 11 008927 A (HARNESS SOGO GIJUTSU KENKYUSHO:KK;SUMITOMO WIRING SYST LTD; SUMITOMO E), 12. Januar 1999 (1999-01-12)

## Beschreibung

Die Erfindung bezieht sich auf eine elektrische Verbindungseinrichtung, insbesondere zur Anordnung zwischen einem Lenkstockschaltermodul und einem Lenkrad eines Kraftfahrzeuges, mit einem feststehenden Gehäuseteil und einem dazu verdrehbaren Gehäuseteil, die jeweils eine Anschlusseinheit tragen und einen gewickelten, jeweils endseitig mit den Anschlusseinheiten verbundenen flexiblen elektrischen Leiter umschließen, der in Form eines doppelten Kegelstumpfes gewickelt und derart angeordnet ist, dass er bei einer Drehung des verdrehbaren Gehäuseteils aus dem einen Gehäuseteil abgewickelt und in das andere Gehäuseteil aufgewickelt wird.

Verbindungseinrichtungen dieser Art, so genannte Wickelfedern, werden insbesondere zur Herstellung einer elektrischen Verbindung zwischen einer Stromquelle und einer in der Lenkradschüssel angeordneten Gas-Aufprall-Schutzeinrichtung sowie zwischen Lenkradschaltern und einem Bordnetz von Kraftfahrzeugen eingesetzt. Hierbei weist ein zwischen dem feststehenden Gehäuseteil und dem dazu verdrehbaren Gehäuseteil angeordneter flexibler Leiter eine solche Länge auf, dass er den beidseitig etwa drei Umdrehungen betragenden Lenkradausschlag zu folgen vermag, wobei sich der Leiter während des Lenkradausschlages aus einer mittleren Lage in der einen Richtung bis zur Anlage an dem stationären Gehäuse nach außen aufweitet und in der anderen Richtung bis zur Anlage an dem verdrehbaren Gehäuseteil nach innen zusammenzieht. Der als Flachbandleitung ausgebildete Leiter ist innerhalb des Gehäuses hochkant ausgerichtet, d.h. seine Stirnseiten weisen also in eine achsparallele Richtung. Die Breite des Leiters ist im Wesentlichen durch die zur Spannungs- und Signalübertragung erforderlichen Leitungen vorgegeben, die innerhalb des Leiters gegeneinander isoliert angeordnet sind. Aufgrund dieser Ausrichtung des elektrischen Leiters weist die Verbindungseinrichtung eine relativ große Bauhöhe auf.

Die EP 0 929 815 A1, die dem Oberbegriff des unabhängigen Anspruchs entspricht, offenbart eine elektrische Verbindungseinrichtung zur Anordnung zwischen Lenkrad und Lekstockschaltermodul eines Kraftfahrzeuges mit einem feststehenden Gehäuseteil und einem dazu verdrehbaren Gehäuseteil, die jeweils eine Anschlusseinheit tragen und einen gewickelten, jeweils endseitig mit den Anschlusseinheiten verbundenen flexiblen elektrischen Leiter umschließen. Der Leiter ist derart angeordnet, dass er bei einer Drehung des des verdrehbaren Gehäuseteils aus dem einen Gehäuseteil abgewickelt und in das andere Gehäuseteil aufgewickelt wird. Hierbei ist der Leiter in Form eines doppelten Kegelstumpfes gewickelt. Die beiden Kegelstümpfe sind parallel zueinander ausgerichtet, wobei ein kegelstumpfförmiges Umlenkteil zwischen den beiden Gehäuseteilen vorgesehen ist.

Es ist Aufgabe der Erfindung, eine elektrische Verbindungseinrichtung der eingangs genannten Art mit einer geringen Baugröße zu schaffen.

Erfindungsgemäß wird die Aufgabe dadurch gelöst, dass der doppelte Kegelstumpf sich ausgehend von einer horizontalen Teilungsebene der Gehäuseteile in Richtung des Deckels des verdrehbaren Gehäuseteils und des Bodens des feststehenden Gehäuseteils erweitert.

Bei einer Drehbewegung wird der Leiter von dem einen Kegelstumpf abgewickelt und auf den anderen Kegelstumpf aufgewickelt. Mit einem flachen Kegelwinkel ist eine relativ niedrige Höhe der Verbindungseinrichtung zu erzielen. Des Weiteren ist die Fertigung des Leiters relativ kostengünstig zu bewerkstelligen, da seine Herstellung beispielsweise mittels Stanzen erfolgen kann. Des Weiteren ist es nicht erforderlich, einen Freiraum für ein Aufweiten des Leiters bei einer dementsprechenden Verdrehung des verdrehbaren Gehäuseteils vorzusehen. Vielmehr ist eine kompakte Bauform der Verbindungseinrichtung sichergestellt und darüber hinaus ist eine durch Vibrationen verursachte Geräuschentwicklung des aufgeweiteten Leiters aufgrund seiner Reibung an den Gehäuseteilen vermieden.

Um eine relativ kurze Gesamtlänge des elektrischen Leiters sicherzustellen, ist vorzugsweise der Leiter in einer richtungsumkehrenden Schleife in den Gehäuseteilen gewickelt. Die Höhe der Verbindungseinrichtung bzw. des Aufnahmeraums für den Leiter richtet sich aufgrund der bei einer bestimmten Drehrichtung die richtungsumkehrende Schleife bildenden Leiters auch nach dessen Flexibilität.

Nach einer vorteilhaften Weiterbildung des Erfindungsgedankens ist der Leiter als eine flexible Leiterplatte ausgebildet, deren Stirnseiten in Umfangsrichtung der Gehäuseteile weisen. Aufgrund dieser Ausrichtung des Leiters, d.h. der Leiter ist mit seiner Breitseite im Wesentlich senkrecht zur Drehachse der Verbindungseinrichtung ausgerichtet, ist eine relativ flache Bauform der Verbindungseinrichtung gewährleistet. Somit kann auch beispielsweise ein die Verbindungseinrichtung aufnehmendes Lenkstockschaltermodul eines Kraftfahrzeuges einen relativ flachen Aufbau aufweisen. Die Ausgestaltung des Leiters als flexible Leiterpatte ermöglicht die Ausbildung eines nahezu beliebigen Layouts von Leiterbahnen zur Übertragung von Spannung und Signalen, beispielsweise von einem Lenkrad zu einem Bordnetz, das über das Lenkstockschaltermodul mit Lenkstockschaltern und mit einer Zentralleiterplatte mit der Verbindungseinrichtung gekoppelt ist. Darüber hinaus weist die flexible Leiterplatte gegenüber einer Flachbandleitung erhöhte Elastizitätseigenschaften sowie einen dünnen Aufbau auf.

Es versteht sich, dass die vorstehend genannten und nachstehend noch zu erläuternden Merkmale nicht nur in der jeweils angegebenen Kombination, sondern auch in anderen Kombinationen verwendbar sind. Der Rahmen der Erfindung ist nur durch die Ansprüche definiert.

Die Erfindung wird im Folgenden anhand eines Ausführungsbeispieles unter Bezugnahme auf die zugehörigen Zeichnungen näher erläutert. Es zeigt:

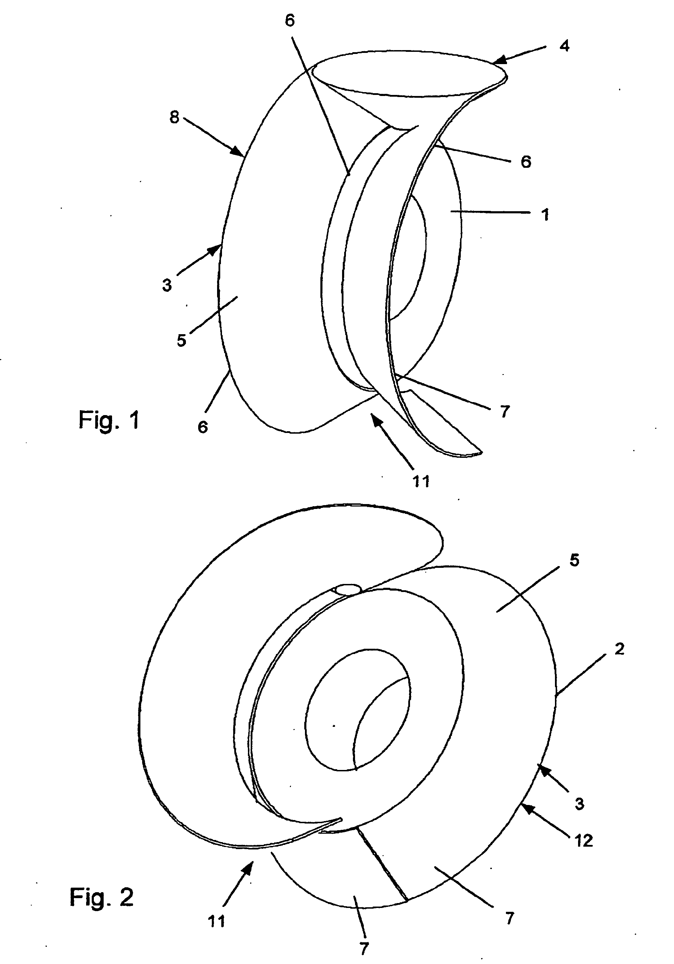

- Fig.1: eine schematische perspektivische Darstellung eines Teils einer erfindungsgemäßen elektrischen Verbin- dungseinrichtung und
- Fig.2: eine weitere Darstellung der Verbindungseinrichtung nach Fig. 1.

Die elektrische Verbindungseinrichtung umfasst ein Gehäuse, das im Wesentlichen aus einem in einem nicht dargestellten Lenkstockschaltermodul festgelegten Gehäuseteil 1 und einem mit einem Lenkrad in Verbindung stehenden, dazu verdrehbaren Gehäuseteil 2 besteht, wobei das Lenkstockschaltermodul mitsamt dem daran festgelegten Gehäuseteil 1 an einem Mantelrohr einer Lenksäule angeordnet ist. Innerhalb der Gehäuseteile 1, 2 befindet sich ein elektrischer Leiter 3, der derart aufgewickelt und bemessen ist, dass das Lenkrad um ca. drei bis vier Umdrehungen verdreht werden kann. Der Leiter 3 ist in einer richtungsumkehrenden Schleife 4 innerhalb der Gehäuseteile 1, 2 geführt, durch die eine relativ kurze Längenausführung des Leiters 3 möglich ist. An den den Gehäuseteilen 1, 2 zugeordneten Enden des Leiters 3 sind Anschlusseinheiten zur Kontaktierung eines lenkradseitigen Steckers sowie eines Bordnetzes befestigt. Der Leiter 3 ist als flexible Leiterplatte 5 ausgeführt, deren Stirnseiten 6 in Umfangsrichtung der Gehäuseteile 1, 2 weisen.

Der Leiter 3 ist in Form eines doppelten Kegelstumpfes 11 in mehreren übereinander liegenden Windungen 7 gewickelt. Hierbei erweitert sich der aufgewickelte Leiter 3 ausgehend von einer horizontalen Teilungsebene der Gehäuseteile 1, 2, die senkrecht zu der Mittelachse der Gehäuseteile 1, 2 ausgerichtet ist, jeweils in Richtung des Deckels des verdrehbaren Gehäuseteils 2 und in Richtung des Bodens des feststehenden Gehäuseteils 1. Geführt wird der Leiter 3 auf zwei zentrischen, sich gegenüberliegenden Naben der Gehäuseteile 1, 2, die gemeinsam ebenfalls die Form eines doppelten Kegelstumpfes aufweisen, der sich zur Mitte hin, also in Richtung der horizontalen Teilungsebene der Gehäuseteile 1, 2, verjüngt.

## Patentansprüche

1. Elektrische Verbindungseinrichtung, insbesondere zur Anordnung zwischen einem Lenkstockschaltermodul und einem Lenkrad eines Kraftfahrzeuges, mit einem feststehenden Gehäuseteil (1) und einem dazu verdrehbaren Gehäuseteil (2), die jeweils eine Anschlusseinheit tragen und einen gewickelten, jeweils endseitig mit den Anschlusseinheiten verbundenen flexiblen elektrischen Leiter (3) umschließen, der in Form eines doppelten Kegelstumpfes (11) gewickelt und derart angeordnet ist, dass er bei einer Drehung des verdrehbaren Gehäuseteils (2) aus dem einen Gehäuseteil (1 oder 2) abgewickelt und in das andere Gehäuseteil (1 oder 2) aufgewickelt wird, **dadurch gekennzeichnet, dass** der doppelte Kegelstumpf (11) sich ausgehend von einer horizontalen Teilungsebene der Gehäuseteile (1, 2) in Richtung des Deckels (12) des verdrehbaren Gehäuseteils (2) sowie des Bodens (8) der feststehenden Gehäuseteils (1) erweitert.

2. Verbindungseinrichtung nach Anspruch 1, **dadurch gekennzeichnet, dass** der Leiter (3) in einer richtungsumkehrenden Schleife (4) in den Gehäuseteilen (1, 2) gewickelt ist.

3. Verbindungseinrichtung nach Anspruch 1 oder 2, **dadurch gekennzeichnet, dass** der Leiter (3) als eine flexible Leiterplatte (5) ausgebildet ist, deren Stirnseiten (6) in Umfangsrichtung der Gehäuseteile (1, 2) weisen.

## Revendications

1. Dispositif de connexion électrique, en particulier destiné à être disposé entre un module de commutateur de colonne de direction et le volant d'un véhicule automobile, comportant une partie de boîtier (1) fixe et une partie de boîtier (2) pouvant tourner par rapport à celle-ci, qui portent chacune une unité de raccordement et enferment un conducteur électrique (3) flexible enroulé, relié à chacune des extrémités aux unités de raccordement, lequel est enroulé sous la forme d'un tronc de cône double (11) et est disposé de manière que lors d'une rotation de la partie de boîtier (2) pouvant tourner il est déroulé d'une partie de boîtier (1 ou 2) et enroulé dans l'autre partie de boîtier (1 ou 2), **caractérisé en ce que** le tronc de cône double (11) s'élargit, partant d'un plan de division horizontal des parties de boîtier (1, 2), en direction du couvercle (12) de la partie de boîtier (2) tournante ainsi que du fond (8) de la partie de boîtier (1) fixe.

2. Dispositif de connexion selon la revendication 1, **caractérisé en ce que** le conducteur (3) est enroulé en une boucle (4) à inversion de sens dans les parties de boîtier (1, 2).

3. Dispositif de connexion selon la revendication 1 ou 2, **caractérisé en ce que** le conducteur (3) est réalisé sous la forme d'une plaquette à circuit (5) flexible dont les faces frontales (6) sont dirigées dans la direction périphérique des parties de boîtier (1, 2).

## Claims

1. Electrical connecting device, in particular for arranging between a steering column switch module and a steering wheel of a motor vehicle, with a fixed housing part (1) and a housing part (2), rotatable thereto, each of which carries a terminal unit and enclose a wound flexible electric conductor (3), connected on its end in each case to the terminal units, which is wound in the shape of a double truncated cone (11) and arranged in such a way that on rotation of the rotatable housing part (2) it is unwound from one housing part (1 or 2) and wound into the other housing part (1 or 2), **characterised in that** the double truncated cone (11) widens, starting from a horizontal dividing plane of the housing parts (1, 2), in the direction of the cover (12) of the rotatable housing part (2) and the bottom (8) of the fixed housing part (1).

2. Connecting device according to claim 1, **characterised in that** the conductor (3) is wound in the housing parts (1, 2) in a direction-reversing loop (4).

3. Connecting device according to claim 1 or 2, **characterised in that** the conductor (3) is constructed as a flexible printed circuit board (5), the end faces (6) of which point in the circumferential direction of the housing parts (1, 2).
